# EUROPÄISCHE PATENTSCHRIFT

(11) **EP 0 999 005 B1**
(45) Veröffentlichungstag und Bekanntmachung des Hinweises auf die Patenterteilung: **03.09.2003**
(21) Anmeldenummer: 99110962.0
(22) Anmeldetag: 08.06.1999
(51) Int. Cl.: B23B 31/28, B23B 31/12

(54) **Spannfutter für eine Werkzeugmaschine**
Chuck for a machine tool
Mandrin pour une machine-outil

(30) Priorität: 02.11.1998 DE 19850334
(43) Veröffentlichungstag der Anmeldung: 10.05.2000
(60) Teilanmeldung: 03012474.7
(73) Patentinhaber: Index-Werke GmbH & Co. KG Hahn & Tessky, 73730 Esslingen (DE)
(72) Erfinder: Widl, Gerhard, Dr.-Ing., 82340 Feldafing (DE)
(74) Vertreter: Hoeger, Stellrecht & Partner

(56) Entgegenhaltungen:
- DE-A- 4 312 937
- FR-A- 1 163 300
- US-A- 4 645 220

## Beschreibung

Die vorliegende Erfindung betrifft ein Spannfutter für eine Werkzeugmaschine nach dem Oberbegriff des Anspruchs 1.

Ein solches Spannfutter ist im Stand der Technik z.B. als Membranspannfutter oder aus der FR 1 163 300 A bekannt.

Bei der Materialbearbeitung mittels Werkzeugmaschinen wie Dreh-, Fräs- eder Schleifmaschinen müssen die zu bearbeitenden Werkstücke in Aufnahmevorrichtungen wie Spannfuttern derart gehalten werden, daß die bei der Bearbeitung auftretenden Kräfte die Stellung des Werkstücks in der Aufnahmevorrichtung nicht verändern.

Bei Werkstücken, die dünnwandig oder aus anderen Gründen leicht deformierbar sind, können die in einem Spannfutter auftretenden Haltekräfte das Werkstück elastisch verformen. Beim Entnehmen des bearbeiteten Werkstücks tritt dann ein Verzug auf. Die durch die Bearbeitung erzeugte hochgenaue Werkstückgeometrie geht dadurch verloren. Ein Beispiel für diese Problematik ist die Bearbeitung von Rohlingen für Getriebe-Zahnräder, die vorher im Laufe der Herstellung gehärtet werden. Diese Härtung führt zu Durchmessertoleranzen der Rohlinge. Diese führen bei Spannen mittels bekannter Spannfutter (wie Keilhakenfuttern, Spannhülsenfuttern, Membranspannfuttern oder Dehnspannfuttern) zu unterschiedlichen elastischen Verformungen für jedes einzelne Werkstück durch das Spannen. Diese unterschiedlichen elastischen Verformungen resultieren nach der Entnahme aus dem Spannfutter durch die elastische Rückverformung in nicht akzeptablen Toleranzen der Abmessungen der bearbeiteten Zahnräder.

Bisher versucht man dieses und ähnliche Probleme dadurch zu lösen, daß ein annehmbarer Kompromiß zwischen Spannkräften und akzeptablen Toleranzen durch aufwendige Versuchsreihen für jeden einzelnen Werkstücktyp gesucht wird. Mit zunehmenden Anforderungen an die Genauigkeit der Bearbeitung im µm-Bereich und Sub-µm-Bereich ist aber selbst mit solchen Versuchen kein akzeptables Ergebnis mehr erzielbar.

Aufgabe der Erfindung ist es, ein Spannfutter, das in einfacher Weise eine Anpassung der Spannkräfte an unterschiedliche Werkstücke und unterschiedliche Bearbeitungen erlaubt, und ein Steuerverfahren dazu anzugeben.

Diese Aufgabe wird gelöst durch ein Spannfutter nach Anspruch 1 bzw. ein Verfahren nach Anspruch 7.

Weiterbildungen der Erfindung sind in den abhängigen Ansprüchen angegeben.

Weitere Merkmale und Vorteile ergeben sich aus der folgenden Beschreibung von Ausführungsbeispielen anhand der Figuren. Von den Figuren zeigen:
- Fig. 1: eine Querschnittsdarstellung einer ersten Ausführungsform;
- Fig. 2: eine Querschnittsdarstellung einer zweiten Ausführungsform;
- Fig. 3: eine Vorderansicht der zweiten Ausführungsform;
- Fig. 4: eine Querschnittsdarstellung eines Stellmoduls; und
- Fig. 5: eine Blockdarstellung einer Steuerung.

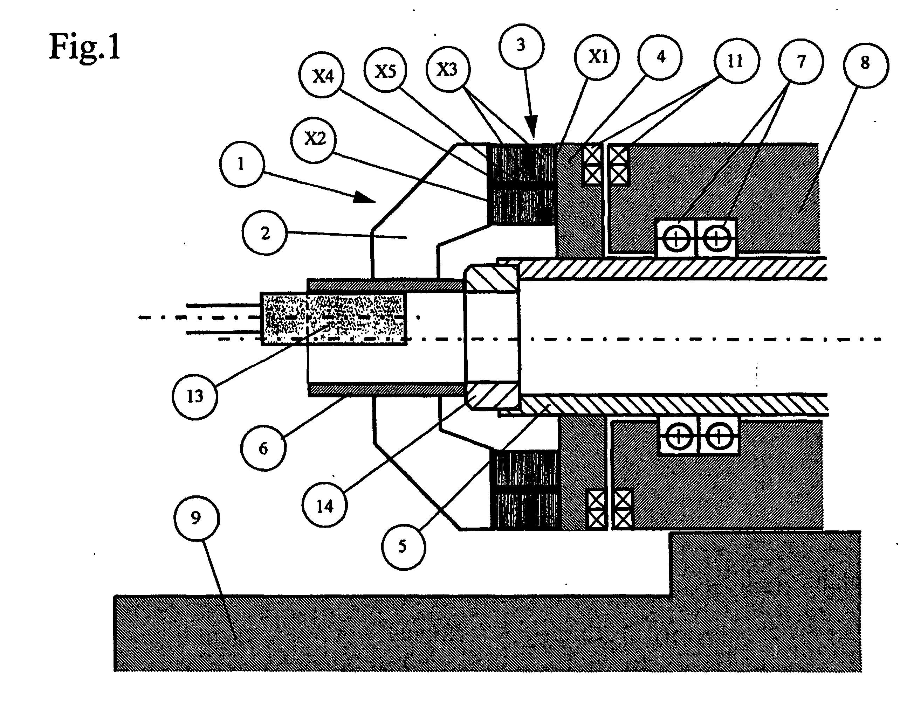

Bei der ersten Ausführungsform der Erfindung, die in Fig. 1 schematisch in einem Querschnitt längs der Drehachse A einer Spindel gezeigt ist, ist ein Spannfutter 1 mit einer Mehrzahl von Spannbacken 2 vorgesehen. Die Spannbacken 2 sind mit einer Spannfutterbasis 4 über jeweils ein Stellmodul 3 verbunden. Die Spannfutterbasis 4 ist mit der Werkstückspindel 5 der Werkzeugmaschine derart verbunden, daß die Bewegungen der Werkzeugspindel wie Drehbewegungen, Zustellbewegungen etc. an das Spannfutter 1 übertragen werden. Die Werkstückspindel 5 ist über Lager 7 mit dem Werkstückspindelaufbau 8 des Maschinenbetts 9 der Werkzeugmaschine verbunden.

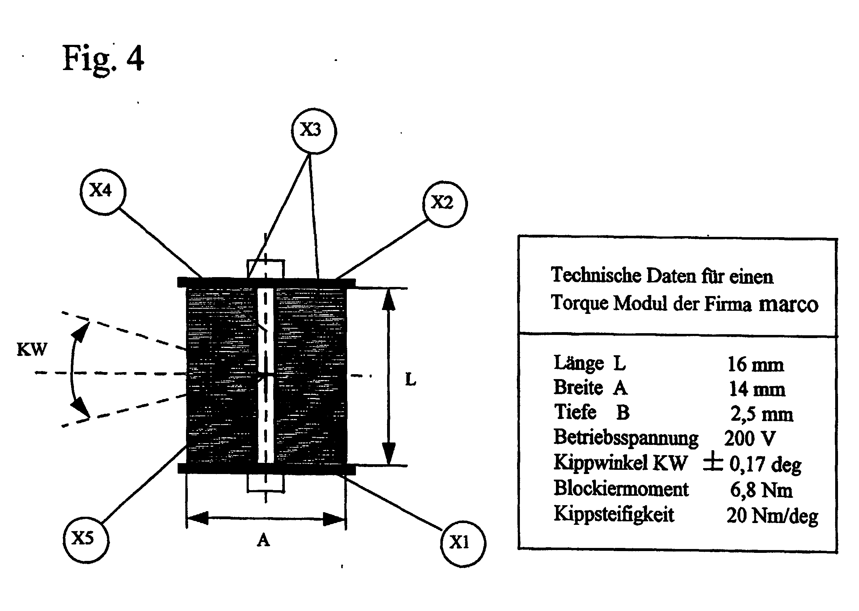

Die Stellmodule 3 bestehen jeweils aus einem Piezodrehstellelement 3. Ein solches Piezodrehstellelement 3 weist eine Grundplatte X1, die mit der Spannfutterbasis 4 verbunden ist, eine Kippplatte X2, die mit der entsprechenden Spannbacke 2 verbunden ist, Piezostellelemente X3, deren Abmessung in einer Längsrichtung in bekannter Weise durch Anlegen elektrischer Spannung steuerbar veränderlich ist, und ein Spannelement X4 auf, wobei die Stellelemente X3 derart angeordnet sind, daß ihre Längsrichtungen parallel zueinander sind und die Grundplatte X1 und die Kippplatte X2 in Längsrichtung ober- und unterhalb der Stellelemente angeordnet sind, und das Spannelement X4 mittig zwischen den beiden Stellelementen X3 angeordnet ist und die Grundplatte X1 und die Kippplatte X2 mit den zwischen diesen angeordneten Stellelementen mit einer vorbestimmten Spannung vorspannt. Die Stellelemente werden mit gegenläufigen Spannungsänderungen angesteuert, d.h. wenn an das eine Piezostellelement eine Spannungsänderung in einer Richtung (positiv oder negativ) angelegt wird, dann wird an das andere Piezostellelement eine relativ dazu entgegengesetzte (negativ oder positiv) Spannungsänderung angelegt. Daraus folgt eine gegenläufige (antisymmetrische) Längenänderung der beiden Piezostellelemente. Da die Länge des Stellmoduls 3 durch die Vorspannung mit dem Spannelement X4 festgelegt ist, wird durch die gegenläufige Längenänderung der Piezostellelemente X3 eine Drehbewegung der Kippplatte X1 um einen (virtuellen) Drehpunkt X5 verursacht. Die Stellmodule sind derart auch temperaturkompensiert, d.h. eine Temperaturänderung führt nicht zu Stellbewegungen. Ein Beispiel für Stellmodule der beschriebenen Art ist in der DE 196 46 511 C1 offenbart. Die technischen Daten eines handelsüblichen Stellmoduls dieser Art sind in der Tabelle in Fig. 4 gezeigt.

Jede Spannbacke 2 ist derart mittels des entsprechenden Stellmoduls 3 um einen (virtuellen) Drehpunkt, nämlich den Drehpunkt X5 des entsprechenden Stellmoduls bewegbar. Ein Werkstück 6 kann derart durch gesteuertes Bewegen der Spannbacken 2, wie es später beschrieben wird, gespannt werden.

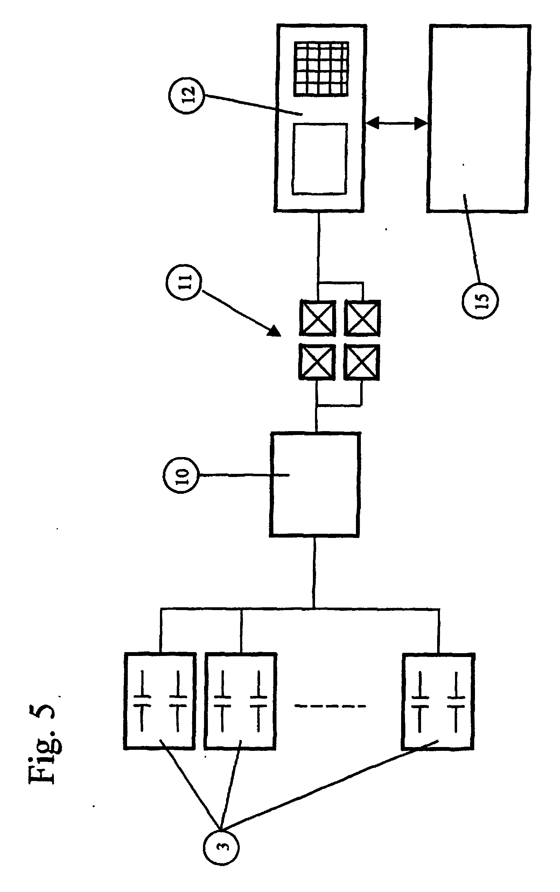

Der Steuerungsaufbau für das Spannfutter ist in Fig. 5 schematisch gezeigt. Die Stellmodule 3 weisen jeweils eine Ansteuerelektronik 10 auf, die über eine berührungslose Energie- und Datenübertragungseinrichtung 11 mit Spannung und mit Steuerdaten beliefert wird. Die Steuerdaten werden von einer Steuerung 12 für jedes der Stellmodule 3 erzeugt. Die Stellmodule 3 sind derart einzeln ansteuerbar, so daß die einzelnen Spannbacken 2 unabhängig von den anderen Spannbacken 2 in einer einfachen Weise gesteuert bewegt werden können.

Die Ansteuerelektronik 10 ist in Fig. 1 nicht gezeigt, aber sie ist bevorzugterweise zwischen und/oder hinter den Spannbacken angeordnet, so daß der Platzbedarf für die mitrotierende Ansteuerelektronik, der ohnehin gering ist, die Baugröße des Spannfutters nicht erhöht, insbesondere nicht in radialer Richtung Die Steuerung 12 kommuniziert mit der übergeordneten Steuerung 15 der Werkzeugmaschine.

Die berührungslose Energie- und Datenübertragungseinrichtung 11 ist durch Spulen in den einander zugewandten Seiten des Werkstückspindelaufbaus (Werkstückspindelkopf) 8 und der Spannfutterbasis 4 ausgebildet, so daß auch der Platzbedarf dafür sehr gering ist. Alternativ könnte die Energie- und Datenübertragungseinrichtung kontaktierend z.B. als Schleifkontakte ausgebildet sein.

Bei der ersten Ausführungsform entfallen durch die direkte Verbindung der Spannbacken 2 mit den Stellmodulen 3 und die direkte Ansteuerung über diese alle zwischengeschalteten mechanischen Elemente. Die Anzahl der Teile sinkt dadurch deutlich und die Baugröße wird stark reduziert.

In dem Spannfutter sind bevorzugterweise Sensoren (nicht gezeigt) angeordnet, die die Spannkraft jeder Spannbacke messen. Die derart gewonnene Information wird an die Ansteuerelektronik 10 und/oder die Steuerung 12 geliefert.

Es wird nun ein Verfahren zum Steuern des Spannfutters zum Spannen von Werkstücken beschrieben. Bei der Bearbeitung wird oft zuerst eine Grobbearbeitung des Werkstücks durch das Werkzeug 13 (z. B. einen Schleifscheibe) durchgeführt, bei der aufgrund starken Spanung relativ große Bearbeitungskräfte auftreten, die wiederum große Spannkräfte erfordern. Je näher die Bearbeitung an die Zielabmessungen kommt, desto feiner wird sie und damit die Spanung und damit die notwendigen Spannkräfte. Die Steuerung 12 steuert jedes Stellmodul 3 individuell derart an, daß nach einer vorbestimmten Regel zur Bestimmung der Spannkräfte diese derart bestimmten Spannkräfte durch die jeweilige Spannbacke 2 auf das Werkstück 6 ausgeübt werden. Bei grober Bearbeitung werden entsprechend höhere Spannkräfte ausgeübt, die durch Rückkopplung mittels der Sensoren exakt ausgeübt werden können. Bei feinerer Bearbeitung werden entsprechend der vorbestimmten Regel kleinere Spannkräfte ausgeübt, die dann zu einem geringeren Verzug führen.

So können die einzelnen Spannbacken 2 mittels Rückkopplung über die Sensoren in jedem Stadium der Bearbeitung zur Ausübung einer exakt vorgegebenen Spannkraft angesteuert werden, die unabhängig von der tatsächlichen Ursprungsform des jeweiligen Werkstücks auch exakt eingehalten werden kann.

Nach einer Weiterbildung wird die Bearbeitungskraft (z.B. Spankraft), die durch das Werkzeug ausgeübt wird, erfasst. Dieses erfolgt bei rotierendem Werkzeug wie einer Schleifscheibe z.B. dadurch, daß das auf das Werkzeug ausgeübte Drehmoment durch einen geeigneten Sensor erfasst wird, z. B. durch Erfassung des Motorstroms des eine Schleifscheibe antreibenden Motors. Bei einem feststehenden Werkzeug wie einem Drehstahl wird z.B. der Motorstrom des Werkstückantriebs erfasst oder der Zustellwert aus der NC-Steuerung zur Berechnung der Bearbeitungskraft verwendet. Das Prinzip liegt darin, die Reaktionskraft (actio=reactio) des Werkstücks zu erhalten. Diese Größe wird dann als Regelparameter für die Berechnung der Haltekraft (Spannkraft), die durch das Spannfutter auf das gerade bearbeitete Werkstück auszuüben ist, verwendet.

Weiterhin können in dem Spannfutter bevorzugter Weise entweder alternativ oder zusätzlich Sensoren (nicht gezeigt) angeordnet sein, die den von jeder Spannbacke zurückgelegten Stellweg erfassen. Die derart gewonnene Information wird an die Ansteuerelektronik 10 und/oder die Steuerung 12 geliefert. Derart kann einerseits über eine Umrechnungsregel von der Ansteuerelektronik 10 und/oder der Steuerung 12 die ausgeübte Spannkraft berechnet werden. Diese Lösung kann aufgrund der Kosten der Sensoren preisgünstiger als die direkte Erfassung der Spannkraft sein. Aus der Information über den Stellweg läßt sich aber zusätzlich eine Information über die tatsächliche Deformierung des momentan gehaltenen Werkstücks gewinnen. Diese Deformationsinformation wird dann zur Berechnung der zulässigen Spannkräfte (in der vorbestimmten Regel zur Bestimmung der Spannkräfte) verwendet

Die vorbestimmte Regel kann z. B. durch eine Berechnungsregel, die in der Software des Steuerprogramms verwirklicht ist, oder durch eine Wertetabelle, die in der Steuerung abgelegt ist und z.B. eine Zuordnung von Bearbeitungskraft, Drehzahl der Werkstuckspindel und Spannkraft pro Spannbacke enthält, verwirklicht sein.

Die Messung der je Spannbacke ausgeführten Bewegung ermöglicht eine weitere Steuermöglichkeit, nämlich die entsprechende Werkstückpositionierung relativ zum Werkzeug zu verschieben (z.B. den Mittelpunkt eines Achslochs), um bestimmte Bearbeitungen auszuführen (z.B. unrunde Konturen ausgleichen).

Nach einer Weiterbildung ist auf der Werkstückspindel ein Sensor 14 zum Erfassen des Anliegens des Werkstücks vorgesehen, der mit der Steuerung 12 verbunden ist.

Die Kompensation der Fliehkräfte, die durch die Drehung des Spannfutter entstehen, kann natürlich in herkömmlicher Weise durch entsprechend angeordnete Ausgleichsgewichte an den Spannbacken, die in Fig. 1 nicht gezeigt sind erfolgen. Es ist mit der ersten Ausführungsform aber möglich, diese Fliehkräfte individuell für jede Spannbacke 2 mittels der Stellmodule 3 zu kompensieren. Ganz besonders zu bevorzugen ist ein Kombination der beiden Wege. Der Hauptteil der Fliehkräfte wird durch Gegengewichte so kompensiert, daß der Schwerpunkt der Spannbacke ungefähr im Drehpunkt X5 des Stellmoduls 3 liegt. Die Variation der Fliehkräfte, die z.B. durch den Verschleiß der Spannbacken und das dadurch erforderliche Nachschleifen der Spannbacken entsteht, wird durch die Stellmodule 3 ausgeglichen. Dieser Ausgleich erfolgt in der beschriebenen rückgekoppelten Weise. Daher können selbst Deformationen der Werkstückgeometrie, die durch derartige Fliehkraftvariationen entstehen könnten, ausgeglichen werden. Das ist bei den mittlerweile auftretenden Drehzahlen der Werkstückspindeln von bis zu 10.000 U/min ein nicht zu vernachlässigender Vorteil.

Die individuell geregelte Einstellen der Spannkräfte könnte grundsätzlich auch mittels hydraulischer oder pneumatischer Lösungen bewerkstelligt werden. Aufgrund von sogenannten Stick-Slip-Effekten, d.h. der durch die vergleichsweise hohe innere Reibung solcher Systeme in mechanischen Lagern und Stellgliedern hervorgerufenen Effekte, daß Änderungen der ausgeübten Kräfte nur in relativ großen Änderungsschritten erfolgen können, sind hochgenaue Einstellungen aber nur mit sehr hohem Aufwand möglich. Bei der ersten Ausführungsform werden aber Stellmodule verwendet, die eine relativ geringe innere Reibung aufweisen und daher mit vergleichsweise niedrigem Aufwand eine hochgenaue Steuerung erlauben.

Nach einer weiteren Weiterbildung werden die Spannbacken in herkömmlicher Weise bis zu einer vorbestimmten Stellung der Spannbacken 2 in Kontakt mit dem Werkstück 6 oder nahe des Werkstücks 6 gestellt. Dieses erfolgt z.B. dadurch, daß der Teil der Spannfutterbasis 4, an dem die Stellmodule 3 angebracht sind, als Membranspannfutter oder Keilhakenspannfutter o.ä. (nicht gezeigt) ausgebildet ist. Dieses herkömmliche Spannfutter wird dann in bekannter Weise bis zu der vorbestimmten Stellung relativ zu dem Werkstück 6 betrieben und dann in dieser Stellung verriegelt. Der weitere Stellweg der einzelnen Spannbacken 2 wird dann in der oben beschriebenen Weise eingestellt. Dadurch können die Stellmodule 3 und der Übertragungsweg ihrer Stellbewegung so ausgebildet werden, daß nur eine sehr kleiner Teil des notwendigen Gesamtstellwegs von diesen geliefert wird.

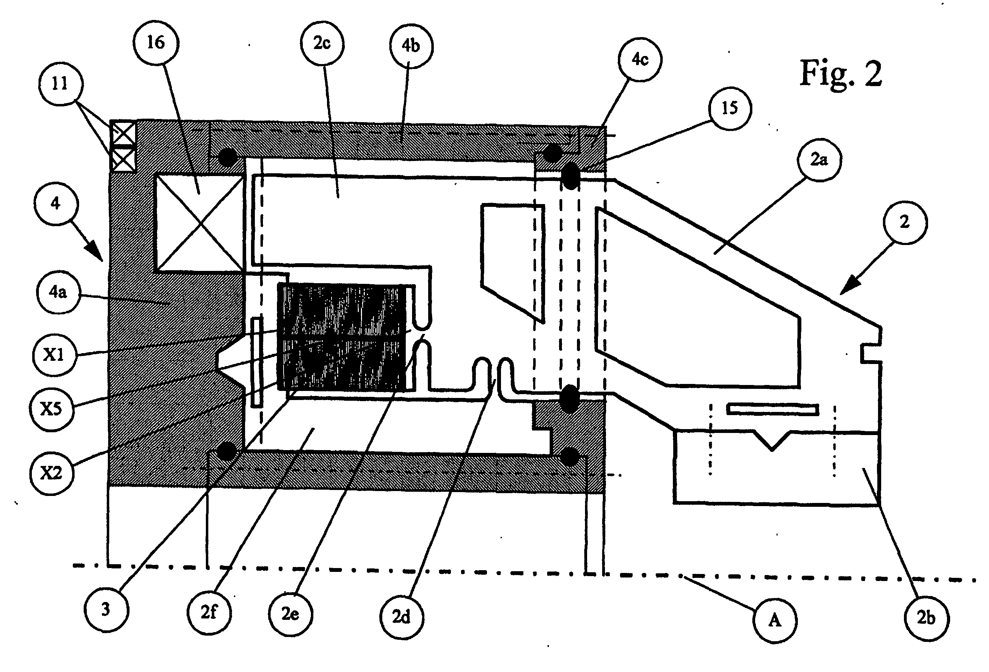

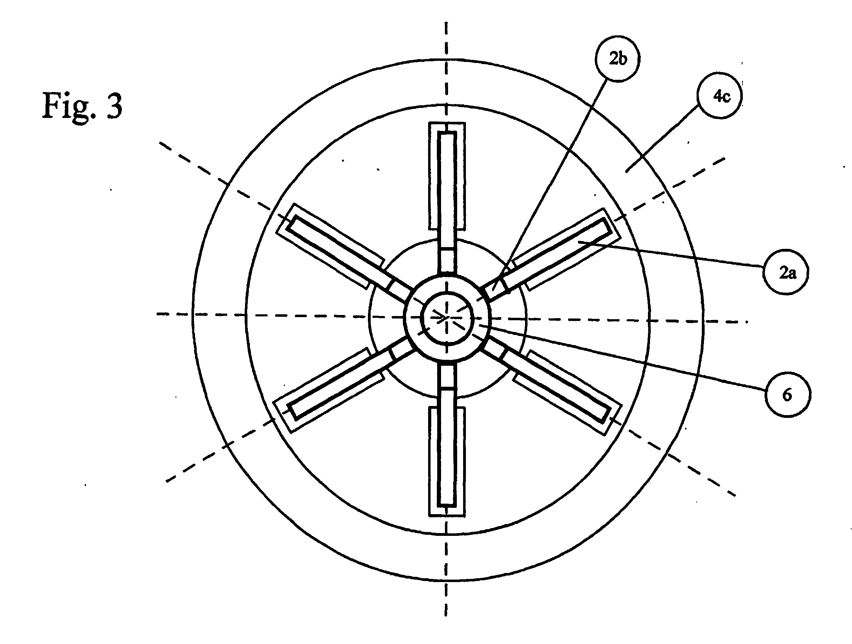

Unter Bezugnahme auf die Fig. 2 und 3 wird nun eine zweite Ausführungsform des Spannfutters beschrieben. Bis auf die nachfolgend beschriebenen Unterschiede entspricht der Aufbau und die Steuerung der zweiten Ausführungsform der ersten Ausführungsform. Abschnitte und Teile, die dieselben oder vergleichbare Funktionen haben, sind mit denselben Bezugszeichen wie bei der ersten Ausführungsform bezeichnet. Die zweite Ausführungsform der Erfindung ist in Fig. 2 schematisch in einem Querschnitt längs der Drehachse A einer Spindel so gezeigt, daß nur der oberhalb der Drehachse gelegene Abschnitt des Spannfutters 1 gezeigt ist.

Das Spannfutter 1 ist mit einer Mehrzahl von Spannbacken 2 (z.B. 6 Spannbacken, wie es in Fig. 3 gezeigt ist) vorgesehen, die jeweils einen Bewegungsabschnitt 2a, ein auswechselbares Spannbackenendstück 2b, einen Ausgleichsgewichtsabschnitt 2c, ein Biegegelenk 2d, einen Stellmodulverbindungsabschnitt 2e und einen L-förmigen Basisverbindungsabschnitt 2f aufweisen. Der Bewegungsabschnitt 2a, der Ausgleichsgewichtsabschnitt 2c, das Biegegelenk 2d, der Stellmodulverbindungsabschnitt 2e und der Basisverbindungsabschnitt 2f sind einstückig ausgebildet, wobei das Biegegelenk 2d den Bewegungsabschnitt 2a und den Basisverbindungsabschnitt 2f gelenkig verbindet. Jeweils ein Stellmodul 3 ist in eine Spannbacke 2 zwischen den Stellmodulverbindungsabschnitt 2e und den Basisverbindungsabschnitt 2f eingesetzt. Der Stellmodulverbindungsabschnitt 2e weist einen der Kippplatte X2 zugewandten und mit dieser verbundenen Plattenabschnitt auf. Der L-förmige Basisverbindungsabschnitt 2f weist die Form eines liegenden L auf, wobei das Unterteil des L eine Ausnehmung aufweist, in die die Grundplatte X1 des Stellmoduls 3 eingesetzt ist. Derart sind das Stellmodul 3 und der Stellmodulverbindungsabschnitt 2e und der Basisverbindungsabschnitt 2f kraftschlüßig verbunden, so daß Stellbewegungen (Kippbewegungen der Kippplatte X2 um den Drehpunkt X5 relativ zur Grundplatte X1) des Stellmoduls 3 zu entsprechenden Drehbewegungen des Bewegungsabschnitts 2a relativ zu dem Basisverbindungsabschnitt 2f um das Drehgelenk 2d führen.

Das Spannfutter weist eine Spannfutterbasis 4 auf, die einen Spannfutterbasisgrundabschnitt 4a, einen Spannfutterbasisstirnabschnitt 4c und einen Spannfutterbasisverbindungsabschnitt 4b, der diese verbindet, aufweist. Der L-förmige Basisverbindungsabschnitt 2f ist mit der Spannfutterbasis 4 fest verbunden, z.B. durch Vorsprünge, die in Ausnehmungen der Spannfutterbasis eingesetzt sind, und durch Schraubbolzen etc.. Dadurch sind auch die Grundplatten X1 der Stellmodule 3 der einzelnen Spannbacken 2 (über den dazwischen angeordneten Basisverbindungsabschnitt 2f) fest mit der Spannfutterbasis 4 verbunden. Der um die einzelnen Spannbacken befindliche Bewegungsfreiraum in dem Spannfutter ist durch eine Dichtung 15 gegen das Eindringen von Schmutz und Bearbeitungsrückständen wie Spänen und Schmier- und Kühlmittelreste geschützt. In dem Spannfutterbasisgrundabschnitt 4a ist ein Hohlraum 16 zur Aufnahme der Ansteuerelektronik (siehe 10 in Fig. 5) des Stellmoduls 3 vorgesehen. Der zu dem Spannfutter gehörige Teil der berührungslosen Energie- und Datenübertragungseinrichtung 11 ist mit dem Hohlraum 16 verbunden.

Bei der zweiten Ausführungsform sind die Spannbacken 2 mit den Stellmodulen 3 ebenfalls direkt verbunden. Die Auslenkung der Spannbacken erfolgt direkt aber unter Umlenkung durch das Biegegelenk 2d. Die innere Reibung solcher Biegegelenke ist aber vergleichsweise klein, so daß auch mit der zweiten Ausführungsform eine sehr genaue Ansteuerung der einzelnen Spannbacken gewährleistet ist. Die Anzahl der Teile sinkt ebenfalls deutlich und die Baugröße ist ebenfalls stark reduziert.

Nach einer Weiterbildung der Erfindung ist das Biegegelenk nicht wie bei der in Fig. 2 gezeigten Ausführungsform auf der der Drehachse A zugewandten Seite der Spannbacke sondern auf der der Drehachse abgewandten Seite ausgebildet. Dadurch wird die Hauptbelastung des Biegegelenks eine Druckbelastung anstatt einer Zugbelastung.

Die zweite Ausführungsform kann die Weiterbildungen der ersten Ausführungsform aufweisen.

Die bei rotierendem Spannfutter mittels der Spannkraftsensoren und/oder Stellwegsensoren ermittelten Werte zeigen, wenn keine Bearbeitungskraft ausgeübt wird, eine eventuelle Unwucht des Spannfutters. Die derart ermittelte Unwucht kann dann durch Ausgleichsgewichte korrigiert werden. Solche Ausgleichsgewichte können z.B als mittels Stellschrauben einstellbare Ausgleichsgewichte oder zwischen kleinen Tanks umpumbare Flüssigkeiten vorgesehen sein.

Das Spannfutter nach den Ausführungsformen der Erfindung ermöglicht es, die ausgeübte Spannkraft in sehr feinen Anstufungen zu regeln.

Die kompakte Bauweise der Spannbacken und der Stellglieder ermöglicht es, eine große Anzahl von Spannbacken in dem Spannfutter aufzunehmen ohne die Baugröße stark zu erhöhen. Je größer die Anzahl der Spannbacken ist, desto feiner kann die ausgeübte Spannkraft auf das Werkstück verteilt werden und die auf einen bestimmten Abschnitt des Werkstücks ausgeübte Spannkraft geregelt werden.

## Patentansprüche

1. Spannfutter für eine Werkzeugmaschine zum Einspannen eines Werkstücks, mit einer Spanneinrichtung mit einer Mehrzahl von Spanniucken (2), die jeweils zum Einspannen und Halten eines Werkstücks aus einer Öfimingsstellung in eine Haltestellung bewegbar sind, und
einer Stelleinrichtung zum Bewegen der Spannbacken (2) in die Öffnungsstellung und die Haltestellung,
**dadurch gekennzeichnet,**
**daß** die Stelleinrichtung eine Mehrzahl von Stellgliedern (3) aufweist von denen jedes so ausgebildet ist, daß es zur Kippbewegung um einen Drehpunkt (X5) steuerbar ist, und jeweils mit einer entsprechenden Spannbacke (2) zum bewegen der Spannbacke in die Haltestellung verbunden ist.

2. Spannfutter nach Anspruch 1, **dadurch gekennzeichnet,**
**daß** jedes der Stellglieder ein Medium aufweist, das eine elektrisch und/oder magnetisch steuerbar veränderliche Abmessung aufweist.

3. Spannfutter nach Anspruch 1 oder 2, **dadurch gekennzeichnet,**
**daß** jedes der Stellglieder ein Kippmodul (3) ist, das
eine Grundplatte (X1),
eine Kippplatte (X2),
mindestens zwei Stellelemente (X3), deren Abmessung in einer Längsrichtung elektrisch und/oder magnetisch steuerbar veränderlich ist, und
ein Spannelement (X4)
aufweist, wobei
die Stellelemente derart angeordnet sind, daß ihre Längsrichtungen parallel zueinander sind und die Grundplatte (X1) und die Kippplatte (X2) in Längsrichtung ober- und unterhalb der Stellelemente angeordnet sind, und
das Spannelement (X4) mittig zwischen den mindestens zwei Stellelementen (X3) angeordnet ist und die Grundplatte (X1) und die Kippplatte (X2) mit dazwischen angeordneten Stellelementen mit einer vorbestimmten Spannung vorspannt

4. Spannfutter nach einem der Ansprüche 1 bis 3, **dadurch gekennzeichnet,**
**daß** jedes der Stellglieder ein Kippmodul (3) umfasst, das in einer Längsrichtung eine Vorderseite mit einer Kippplatte (X2) und eine Hinterseite mit einer Grundplatte (X1) und dazwischen den Drehpunkt aufweist, zur Ausführung einer gesteuerten Kippbewegung der Kippplatte (X2) relativ zu der Grundplatte (X1),
**daß** das Spannfutter ein mit einer Spindel (5) der Werkzeugmaschine verbundenes Basisteil (4) aufweist, mit dem die Grundplatten jedes Kippmoduls (3) verbunden sind, und daß die Spannbacken (2) jeweils mit der Kippplatte (X2) des zugehörigen Kippmoduls (3) verbunden sind.

5. Spannfutter nach Anspruch 4, **dadurch gekennzeichnet,**
**daß** jede der Spannbacken (2) zusätzlich über ein Biegegelenk (2d) mit dem Basisteil (4) des Spannfutters verbunden ist.

6. Spannfutter nach einem der Ansprüche 1 bis 5, **dadurch gekennzeichnet,**
**daß** für jede Spannbacke ein Sensor zur Erfassung der Spannkraft der von der Spannbacke ausgeübten Spannkraft und/oder des von der Spannbacke gegenüber einer Grundstellung zurückgelegten Stellwegs vorgesehen ist.

7. Spannfutter nach einem der Ansprüche 1 bis 6, **dadurch gekennzeichnet,**
**daß** die Stelleinrichtung ein erstes Stellmittel mit der Mehrzahl von Stellgliedern (3) und ein zweites Stellmittel zum Bewegen der Spannbacken (2) aufweist,
**daß** das zweite Stellmittel die Spannbacken (2) über einen ersten Teil des Weges zwischen der Öffnungsstellung und der Haltestellung bewegt und das erste Stellmittel über den anderen Teil, und
**daß** das zweite Stellmittel verriegelbar ist.

8. Verfahren zur Steuerung eines Spannfutters nach einem der Ansprüche 1 bis 7 beim Einspannen eines Werkstücks bei einer Bearbeitung,
mit den Schritten
Erfassen der von der Werkzeugmaschine auf das eingespannte Werkstück (6) ausgeübten Bearbeitungskraft,
Bestimmen der aufgrund der erfassten Bearbeitungskraft zur Einspannnung des Werkstücks (6) notwendigen Einspannkraft, und
individuelles Ansteuern der Stellglieder (3) derart, daß die Spannbacken (2) die notwendige Spannkraft ausüben.

9. Verfahren nach Anspruch 8, **dadurch gekennzeichnet,**
**daß** die von den einzelnen Stellgliedern (3) ausgeübte Spannkraft bestimmt wird und die individuelle Ansteuerung mittels Rückkoppelung der bestimmten Spannkraft aktualisiert wird.

10. Verfahren nach Anspruch 9, **dadurch gekennzeichnet,**
**daß** die Bestimmung der von den einzelnen Stellgliedern (3) ausgeübte Spannkraft derart erfolgt, daß sie mittels eines Sensors gemessen oder aus dem von der Spannbacke zurückgelegten Stellweg berechnet wird.

## Claims

1. A chuck for a machine tool for clamping a work piece, comprising a clamping device incorporating a plurality of clamping jaws (2) which are movable from an open position into a holding position for the purposes of clamping and holding a work piece and
an adjusting device for moving the clamping jaws (2) into the open position and the holding position,
**characterised in that**
the adjusting device comprises a plurality of adjusting members (3) each of which is formed in such a manner that it is controllable so as to perform a tilting movement about a pivot point (X5) and is connected to a respective corresponding clamping jaw (2) for moving the clamping jaw into the holding position.

2. A chuck in accordance with Claim 1, **characterised in that** each of the adjusting members comprises a medium which has an electrically and/or magnetically controllable variable dimension.

3. A chuck in accordance with Claim 1 or 2, **characterised in that**
each of the adjusting members is a tilting module (3) which comprises
a base plate (X1),
a tilting plate (X2),
at least two adjusting elements (X3) whose dimension in a longitudinal direction is adapted to be varied in an electrically and/or magnetically controllable manner, and
a clamping element (X4), wherein
the adjusting elements are arranged in such a manner that the longitudinal directions thereof are mutually parallel and the base plate (X1) and the tilting plate (X2) are arranged above and below the adjusting elements in the longitudinal direction, and
the clamping element (X4) is arranged centrally between the at least two adjusting elements (X3), and the base plate (X1) and the tilting plate (X2) together with the adjusting elements arranged therebetween are biased by a predetermined tensional force.

4. A chuck in accordance with any of the Claims 1 to 3,
**characterised**
**in that** each of the adjusting members comprises a tilting module (3) which, in the longitudinal direction, comprises a front face including a tilting plate (X2) and a rear face including a base plate (X1) with the pivot point therebetween for the purposes of executing a controlled tilting movement of the tilting plate (X2) relative to the base plate (X1),
**in that** the chuck comprises a base part (4) which is connected to a spindle (5) of the machine tool and to which the base plates of each tilting module (3) are connected, and
**in that** the clamping jaws (2) are respectively connected to the tilting plate (X2) of the appertaining tilting module (3).

5. A chuck in accordance with Claim 4, **characterised in that** each of the clamping jaws (2) is additionally connected via a flexible linkage (2d) to the base part (4) of the chuck.

6. A chuck in accordance with any of the Claims 1 to 5,
**characterised in that**
there is provided for each clamping jaw a sensor for detecting the clamping force of the clamping force exerted by the clamping jaw and/or the length of the adjustment-path covered by the clamping jaw with respect to a basic position.

7. A chuck in accordance with any of the Claims 1 to 6,
**characterised**
**in that** the adjusting device comprises a first adjusting means including the plurality of adjusting members (3) and a second adjusting means for moving the clamping jaws (2),
**in that** the second adjusting means moves the clamping jaws (2) over a first part of the path between the open position and the holding position whilst the first adjusting means moves them over the other part, and
**in that** the second adjusting means is lockable.

8. A method of controlling a chuck in accordance with any of the Claims 1 to 7 for clamping a work piece during a processing operation,
including the steps of
detecting the operational force exerted by the machine tool on the clamped work piece (6),
determining the clamping force necessary for clamping the work piece (6) on the basis of the detected operational force, and individually controlling the adjusting members (3) in such a manner that the clamping jaws (2) exert the requisite clamping force.

9. A method in accordance with Claim 8, **characterised in that** the clamping force exerted by the individual adjusting members (3) is determined and the individual control processes are actualised by a process of feeding back the determined clamping force.

10. A method in accordance with Claim 9, **characterised in that** the determination of the clamping force exerted by the individual adjusting members (3) is effected in such a manner that it is measured by means of a sensor or is calculated from the length of the adjustment-path covered by the clamping jaw.

## Revendications

1. Mandrin pour une machine-outil destiné au serrage d'une pièce à façonner avec un dispositif de serrage comprenant une multitude de mâchoires de serrage (2), qui peuvent chacune être déplacées pour serrer et maintenir une pièce à façonner à partir d'une position d'ouverture à une position d'arrêt, et un dispositif de réglage pour le déplacement des mâchoires de serrage (2) en position d'ouverture et en position d'arrêt, **caractérisé en ce que** le mécanisme de réglage comporte une multitude de composants de réglage (3), dont chacun est construit de sorte à pouvoir être guidé dans un mouvement basculant autour d'un centre fixe (X5), et que chacun est connecté à une mâchoire de serrage (2) correspondante pour le déplacement de la mâchoire de serrage en position d'arrêt.

2. Mandrin selon la revendication 1, **caractérisé en ce que** chacun des composants de réglage comprend un médium comportant une taille variable pouvant être contrôlée de manière électrique et/ou magnétique.

3. Mandrin selon la revendication 1 ou 2, **caractérisé en ce que** chacun des composants de réglage est un module de basculement (3), qui comprend une plaque de base (X1), une plaque basculante (X2), au moins deux éléments de réglage (X3), dont la taille en direction longitudinale est variable et peut être contrôlée de manière électrique et/ou magnétique, et un élément de serrage (X4), moyennant quoi les éléments de réglage sont disposés de sorte que leurs directions longitudinales sont parallèles l'une à l'autre et que la plaque de base (X1) et la plaque basculante (X2) sont disposées en direction longitudinale au-dessus et au-dessous des éléments de réglage, et que l'élément de serrage (X4) est disposé au centre, entre les éléments de réglage (X3) au nombre minimal de deux, et qu'il provoque une précontrainte sur la plaque de base (X1) et la plaque basculante (X2), avec des éléments de réglage disposés entre elles, en utilisant une tension prédéterminée.

4. Mandrin selon l'une quelconque des revendications 1 à 3, **caractérisé en ce que** chacun des composants de réglage comprend un module de basculement (3), pourvu d'un côté avant avec une plaque basculante (X2) et d'un côté arrière avec une plaque de base (X1), et entre les deux le centre fixe, pour la réalisation d'un mouvement de basculement guidé de la plaque basculante (X2) par rapport à la plaque de base (X1), que le mandrin comprend un composant de base (4) relié à un axe (5) de la machine-outil, avec lequel sont reliées les plaques de base de chaque module de basculement (3), et que les mâchoires de serrage (2) sont reliées chacune à la plaque basculante (X2) du module de basculement (3) concerné.

5. Mandrin selon la revendication 4, **caractérisé en ce que** chaque mâchoire de serrage (2) est reliée de plus à travers un point articulé de flexion (2d) au composant de base (4) du mandrin.

6. Mandrin selon l'une quelconque des revendications 1 à 5, **caractérisé en ce qu'**il est prévu pour chaque mâchoire de serrage un capteur de détection de la force de serrage exercée par la mâchoire de serrage et/ou par la mâchoire de serrage ramenée contre une position normale dans un parcours de réglage.

7. Mandrin selon l'une quelconque des revendications 1 à 6, **caractérisé en ce que** le dispositif de réglage comprend un premier moyen de réglage avec une multitude de composants de réglage (3) et un deuxième moyen de réglage pour le déplacement des mâchoires de serrage (2), que le deuxième moyen de réglage déplace les mâchoires de serrage (2) sur une première portion du chemin entre la position d'ouverture et la position d'arrêt et que le premier moyen de réglage couvre la portion restante, et que le deuxième moyen de réglage peut être verrouillé.

8. Procédé pour la commande d'un mandrin selon l'une quelconque des revendications 1 à 7 lors du serrage d'une pièce à façonner dans le traitement, comprenant les étapes consistant à : détecter la force de traitement exercée par la machine-outil sur la pièce à façonner (6) serrée, déterminer sur la base de la force de traitement détectée pour le serrage de la pièce à façonner (6) la force de serrage nécessaire, et contrôler individuellement les composants de réglage (3) de sorte que les mâchoires de serrage (2) exercent la force de serrage nécessaire.

9. Procédé selon la revendication 8, **caractérisé en ce que** la force de serrage exercée par les composants de réglage individuels (3) est déterminée et que le contrôle individuel met à jour par rétroaction la force de serrage déterminée.

10. Procédé selon la revendication 9, **caractérisé en ce que** la détermination de la force de serrage exercée par les composants de réglage individuels (3) s'ensuit de telle sorte qu'elle est mesurée au moyen d'un capteur ou calculée à partir du parcours de réglage lorsque la mâchoire de serrage est remise en place.
